# EUROPEAN PATENT APPLICATION

(11) **EP 2 620 866 A2**
(43) Date of publication of application: **31.07.2013**
(21) Application number: 13153044.6
(22) Date of filing: 29.01.2013
(51) Int. Cl.: G06F 3/14, G06F 11/36, H04N 5/44, G09G 5/00

(54) **Electronic apparatus and control method thereof and system for inspecting an application**

(30) Priority: 30.01.2012 KR 20120008852
(71) Applicant: Samsung Electronics Co., Ltd., Gyeonggi-do 443-742 (KR)
(72) Inventor: Lee, Tae-dong, Gyeonggi-do (KR); Kim, Ki-ho, Gyeonggi-do (KR)
(74) Representative: Fearnside, Andrew Simon

(57) **Abstract**

An electronic apparatus including: a display unit; a communication unit which communicates with a server to which at least one emulating device is connected locally, through a network; a storage unit which stores therein a predetermined application; and a controller which is connected to the server and transmits the application stored in the storage unit to the emulating device, and receives from the emulating device an execution image of the application processed and executed by the emulating device and displays the execution image on the display unit.

## Description

### BACKGROUND

### 1. Field

Apparatuses and methods consistent with the exemplary embodiments relate to an electronic apparatus and a control method thereof and a system for inspecting an application used in a display apparatus and an upgrading apparatus for upgrading the display apparatus, and more particularly, to an electronic apparatus and a control method thereof and a system for inspecting an application which efficiently inspects whether an application developed by a developer normally operates in corresponding hardware.

### 2. Description of the Related Art

A display apparatus processes image signals/image data transmitted by various external image supply sources or stored in the display apparatus to display an image on a display panel provided in the display apparatus. For example, a display apparatus which is provided to general users includes a TV or a monitor. The display apparatus, such as a TV processes a broadcasting signal transmitted from the outside through various image processing operations such as decoding and scaling operations and provides an image of a desired broadcasting channel.

In a display apparatus, an image processing board, such as a circuit including various chipsets and memories perform the foregoing image processing operations. However, with the development of technology and for the purpose of meeting user's demands and improving convenience and due to other various factors, required functions of the display apparatus become complex. To improve the functions of the display apparatus, i.e., to upgrade the display apparatus, both hardware and software should be considered.

In the case of hardware, all or at least a part of the image processing board mounted in the display apparatus should be physically replaced to upgrade the display apparatus, and this is not efficient from the perspective of both manufacturing and use. To drive advanced software, hardware should be designed corresponding to such software and as a result a general user should purchase a new, upgraded display apparatus.

### SUMMARY

According to the present invention there is provided an apparatus and method as set forth in the appended claims. Other features of the invention will be apparent from the dependent claims, and the description which follows.

The foregoing and/or other aspects may be achieved by providing an electronic apparatus including: a display unit; a communication unit which communicates with a server to which at least one emulating device is connected locally, through a network; a storage unit which stores therein a predetermined application; and a controller which is connected to the server and transmits the application stored in the storage unit to the emulating device, and receives from the emulating device an execution image of the application processed and executed by the emulating device and displays the execution image on the display unit.

The emulating device may correspond to hardware specifications of an upgrading apparatus which is connected to a display apparatus processing an image signal according to a preset image processing operation and displaying an image based on the processed image signal, and the upgrading apparatus upgrades the image processing operation.

A plurality of emulating devices may be connected to the server, and at least a part of the plurality of emulating devices may include different hardware specifications from the remaining emulating devices.

The controller may display a user interface (UI) image which is provided to select one of the plurality of emulating devices connected to the server, and may be connected to the emulating device selected through the UI image.

The emulating device may be in the form of a dongle and may be connected to the server.

Another aspect of the exemplary embodiment may be achieved by providing a control method of an electronic apparatus including: connecting at least one emulating device locally to a server through a network; transmitting a stored predetermined application to the emulating device; and receiving from the emulating device and displaying an execution image of the application processed and executed by the emulating device.

The emulating device may correspond to hardware specification of an upgrading apparatus which is connected to a display apparatus processing an image signal according to a preset image processing operation and displaying an image based on the processed image signal, and the upgrading apparatus upgrades the image processing operation.

A plurality of emulating devices may be connected to the server, and at least a part of the plurality of emulating devices may include different hardware specifications from the remaining emulating devices.

The connecting to the server through the network may include displaying a UI image which is provided to select one of the plurality of emulating devices connected to the server; and connecting to the emulating device selected through the UI image.

The emulating device may be in the form of a dongle and connected to the server.

Another aspect of the exemplary embodiment may be achieved by providing a system for inspecting an application including: at least one client; a server which communicates with the at least one client through a network; and at least one emulating device which is locally connected to the server, wherein the client connects to the server and transmits a stored application to the emulating device, and the emulating device processes and executes the application transmitted by the client and transmits an execution image of the application to the client to display the execution image in the client.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates an example of a display system according to an exemplary embodiment;
FIG. 2 is a block diagram of the display system in FIG. 1;
FIGS. 3 and 4 illustrate an example of upgrading an image processing operation of a display apparatus by an upgrading apparatus in the display system in FIG. 1;
FIG. 5 is a block diagram of a system for inspecting an application according to the exemplary embodiment;
FIG. 6 illustrates a signal transmission and reception between the electronic apparatus, a server and an emulating device in FIG. 5; and
FIG. 7 illustrates an example of a user interface (UI) image which is provided to select one of a plurality of emulating devices connected to the server in FIG. 5.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

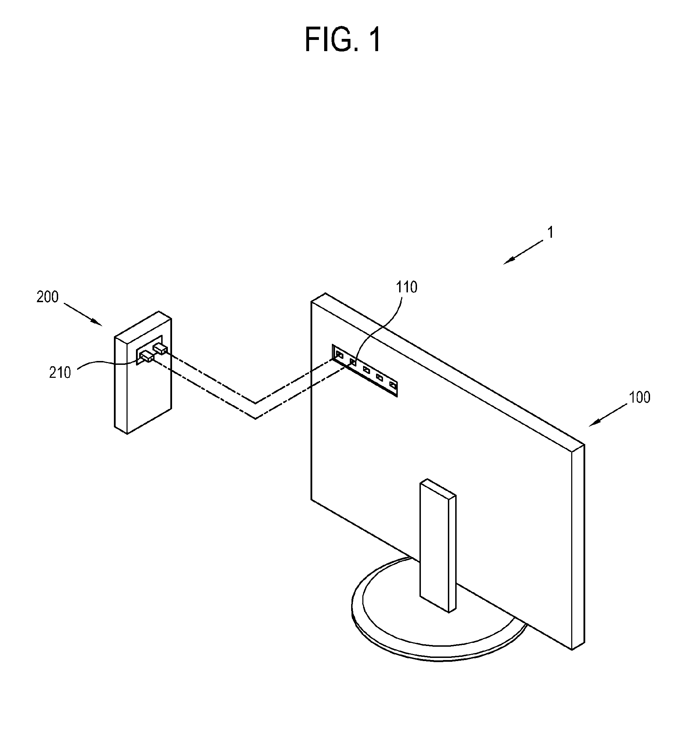

FIG. 1 illustrates an example of a display system 1 according to an exemplary embodiment.

As shown therein, the display system 1 includes a display apparatus 100 which processes an image signal supplied by an external image supply source (not shown) according to a preset image processing operation and displays an image based on the processed image signal; and an upgrading apparatus 200 which upgrades hardware/software of the display apparatus 100. The display apparatus 100 of the display system 1 includes a TV which displays a broadcasting image based on broadcasting signals/broadcasting information/broadcasting data transmitted by a transmission device of a broadcasting station. However, the display apparatus 100 is not limited thereto and various types of embodiments displaying an image may be used.

The type of an image which is displayable by the display apparatus 100 is not limited to a broadcasting signal. For example, the display apparatus 100 may display video, still images, applications and on-screen display (OSD) based on signals/data supplied by various image supply sources, and a graphic user interface (GUI) for controlling various operations, but not limited thereto.

The upgrading apparatus 200 is connected to the display apparatus 100 for communication. The upgrading apparatus 200 may upgrade existing hardware/software of the connected display apparatus 100 so that the upgraded hardware/software of the display apparatus 100 may process an image signal and display an image with an improved quality.

The upgrading apparatus 200 may be connected to the display apparatus 100 in a wired/wireless manner. The upgrading apparatus 200 according to the present exemplary embodiment may be connected to the display apparatus 100 in a wired manner to transmit and receive data/information/signals/power to/from the display apparatus 100. The upgrading apparatus 200 and the display apparatus 100 include connector/terminal 110 and 210 for physical/electrical connection therebetween.

Alternatively, the upgrading apparatus 200 may be connected to the display apparatus 100 in a wireless manner. In this case, the upgrading apparatus 200 receives power from an additional external power source or a battery. However, in the present exemplary embodiment, the case where the upgrading apparatus 200 is connected to the display apparatus 100 in a wired manner will be explained.

The display apparatus 100 may independently process an image signal supplied from the outside according to a preset image processing operation and display an image based on the processed image signal. However, according to the present exemplary embodiment, as the display apparatus 100 is connected to the upgrading apparatus 200, hardware/software of the display system 1 which performs the foregoing image processing operation are upgraded and an image with an improved quality may be provided to a user.

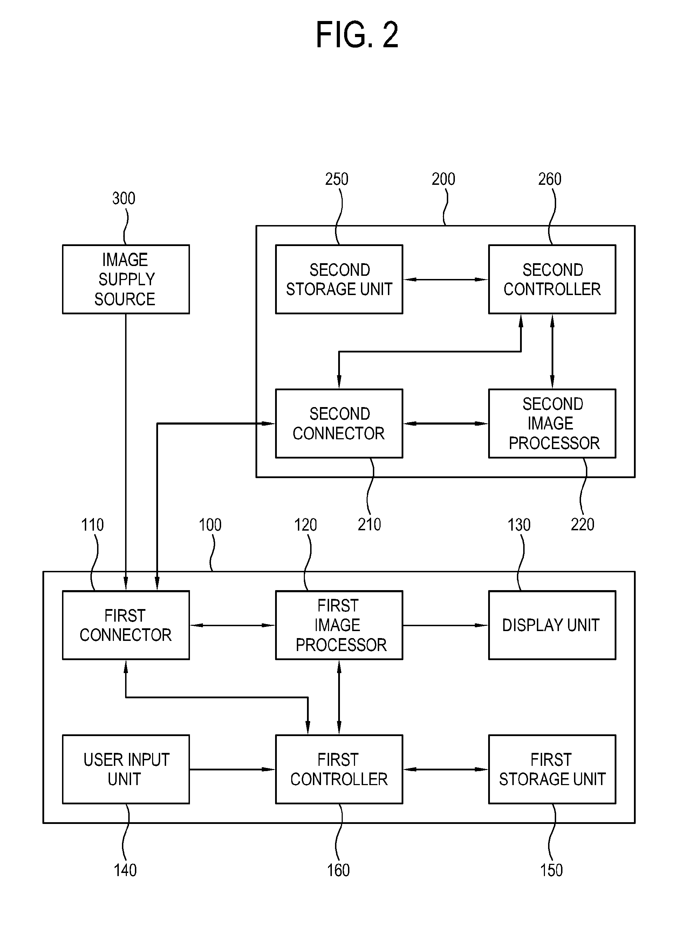

Hereinafter, elements of the display apparatus 100 and the upgrading apparatus 200 will be described with reference to FIG. 2. FIG. 2 is a block diagram of the display apparatus 100 and the upgrading apparatus 200 which form the display system 1.

As shown therein, the display apparatus 100 includes a first connector 110 to which at least one image supply source 300 is connected, a first image processor 120 which processes an image signal supplied by the image supply source 300 through the first connector 110, a display unit 130 which displays an image thereon based on the image signal processed by the first image processor 120, a user input unit 140 which outputs a preset command according to a user's manipulation, a first storage unit 150 which stores therein unlimited data/information, and a first controller 160 which controls operations of the overall elements of the display apparatus 100.

The first connector 110 transmits to the first image processor 120 an image signal supplied by at least one image supply source 300, and the first connector 110 varies depending on a standard of a received image signal or an embodiment type of the image supply source 300 and the display apparatus 100. For example, the first connector 110 may receive signals/data according to high definition multimedia interface (HDMI), USB, component and other standards, and includes a plurality of connection terminals (not shown) corresponding to such standards. Various external devices including the image supply source 300 are connected to the connection terminals to enable communication via the first connector 110.

That is, the external device which is connected to the first connector 110 is not limited to the image supply source 300, and any device which may transmit and receive signals/data to/from the display apparatus 100 through the first connector 110 may be connected to the first connector 110. According to the present exemplary embodiment, the upgrading apparatus 200 may be connected to the first connector 110.

The first image processor 120 performs preset various image processing operations with respect to an image signal transmitted through the first connector 110. The first image processor 120 outputs the processed image signal to the display unit 130 to display an image on the display unit 130 based on the image signal.

The image processing operations of the first image processor 120 include a demultiplexing operation to divide a predetermined signal into signals by nature, a decoding operation corresponding to an image format of an image signal, a de-interlacing operation to convert an interlace image signal into a progressive image signal, a scaling operation to adjust an image signal into a preset resolution, a noise reduction operation to improve an image quality, a detail enhancement operation, and a frame refresh rate conversion operation, but the image processing operations of the first image processor 120 are not limited thereto.

The first image processor 120 may be in the form of an image processing board (not shown) which is formed by a printed circuit board (not shown) in which various chipsets (not shown), memories (not shown), electronic parts (not shown) and wires (not shown) are mounted to perform the foregoing operations.

The display unit 130 displays thereon an image based on an image signal processed by the first image processor 120. The display unit 130 may include liquid crystal, plasma, light-emitting diode, organic light-emitting diode, surface-conduction electron-emitter, carbon nano-tube, and nano-crystal, but the display unit 130 is not limited thereto.

The display unit 130 may further include additional elements depending on its embodiment type. For example, if the display unit 130 includes liquid crystal, it may further include a liquid crystal display (LCD) panel (not shown), a backlight unit (not shown) emitting light to the LCD panel, and a panel driving substrate (not shown) driving the LCD panel.

The user input unit 140 transmits various preset control commands or unlimited information to the first controller 160 according to a user's manipulation and input. The user input unit 140 may be in the form of a menu key and an input panel installed in an external side of the display apparatus 100 or may be in the form of a remote controller that is separated from the display apparatus 100.

The user input unit 140 may be formed integrally in the display unit 130. That is, if the display unit 130 includes a touch screen, a user may transmit to the first controller 160 a preset command through an input menu (not shown) displayed on the display unit 130.

The first storage unit 150 stores therein unlimited data according to a control of the first controller 160. The first storage unit 150 includes a non-volatile memory such as a flash memory and a hard disc drive. The first storage unit 150 is accessed by the first controller 160, and data are read/recorded/amended/deleted/updated by the first controller 160.

The data stored in the first storage unit 150 include, e.g., an operating system for driving the display apparatus 100, and other various applications, which are executed in the operating system, and image data and additional data.

The first controller 160 performs control operations for various elements of the display apparatus 100. For example, the first controller 160 controls entire operations of the display apparatus 100 by controlling the first image processor 120 to process an image, by transmitting and receiving signals/information/data through the first connector 110 and by performing a corresponding control operation to a command of the user input unit 140.

The display apparatus 100 with the foregoing configuration is required to be upgraded due to various factors including advanced technology as use time elapses. For example, the display apparatus 100 should be upgraded when (i) an image signal in a new format which has not been offered at the time of manufacturing the display apparatus 100 is received, (ii) an image signal with a resolution which is higher than the level supported by the display apparatus 100 is received or (iii) load to the display apparatus 100 should be reduced, but not limited to the foregoing cases.

Upgrading the display apparatus 100 may be considered from the perspectives of both hardware and software. According to the present exemplary embodiment, if the upgrading apparatus 200 which upgrades the display apparatus 100 is connected to the first connector 110, at least one of existing hardware and software of the display apparatus 100 is upgraded. The upgrading apparatus 200 includes hardware/software corresponding to at least a part of hardware/software resources of the display apparatus 100. The hardware/software of the upgrading apparatus 200 may perform a better function than the at least a part of hardware/software resources of the display apparatus 100 does. Upon connection to the display apparatus 100, the upgrading apparatus 200 replaces at least a part of existing resources of the display apparatus 100 and ultimately improves a quality of an image displayed in the display apparatus 100.

Hereinafter, elements of the upgrading apparatus 200 will be described.

The upgrading apparatus 200 includes a second connector 210 which is connected to the first connector 110 of the display apparatus 100, a second image processor 220 which performs an image process operation corresponding to at least a part of the image processing operations of the first image processor 120, a second storage unit 250 which stores therein unlimited data/information, and a second controller 260 which controls overall operations of the upgrading apparatus 200.

The second connector 210 is connected to the first connector 110 to enable communication between the upgrading apparatus 200 and the display apparatus 100. The second connector 210 has a standard corresponding to the first connector 110 to be connected to the first connector 110 and may be connected to at least one of a plurality of connection terminals (not shown) of the first connector 110.

For example, the second connector 210 may be connected to an HDMI terminal (not shown) to allow transmission/reception of image signals between the display apparatus 100 and the upgrading apparatus 200, and may be connected to a USB terminal (not shown) to allow transmission/reception of data and power therebetween among the plurality of connection terminals of the first connector 110. However, this is an example and the connection method for the first and second connectors 110 and 210 is not limited thereto and may vary.

With respect to at least a part of the first processes performed by the first image processor 120 of the display apparatus 100, the second image processor 220 may perform a second process corresponding to the first process. The first process and the second process are named to distinguish them, may include a single unit process or a plurality of unit processes. The second process is an improved process in functionality compared to the first process, and this is realized by improvement of hardware such as chipsets or improvement of software such as algorithm/execution codes/programs.

The second image processor 220 performs a second process instead of the first process according to a control of the first controller 160 or the second controller 260 when the display apparatus 100 is connected to the upgrading apparatus 200. Regarding the performance of the image processing operation, the second process which is an improved operation in functionality compared to the first process is performed on behalf of the first process. As a result, the image processing operation improves as a whole. This will be described in detail in the exemplary embodiment below.

The second storage unit 250 stores therein unlimited data. The second storage unit 250 includes a non-volatile memory such as a flash memory and a hard disc drive. The second storage unit 250 is accessed by the first controller 160 or the second controller 260, and data are read/recorded/amended/deleted/updated by the first controller 160 or the second controller 260. The first storage unit 150 may be also accessed by the second controller 260 as well as by the first controller 160 depending on its embodiment type.

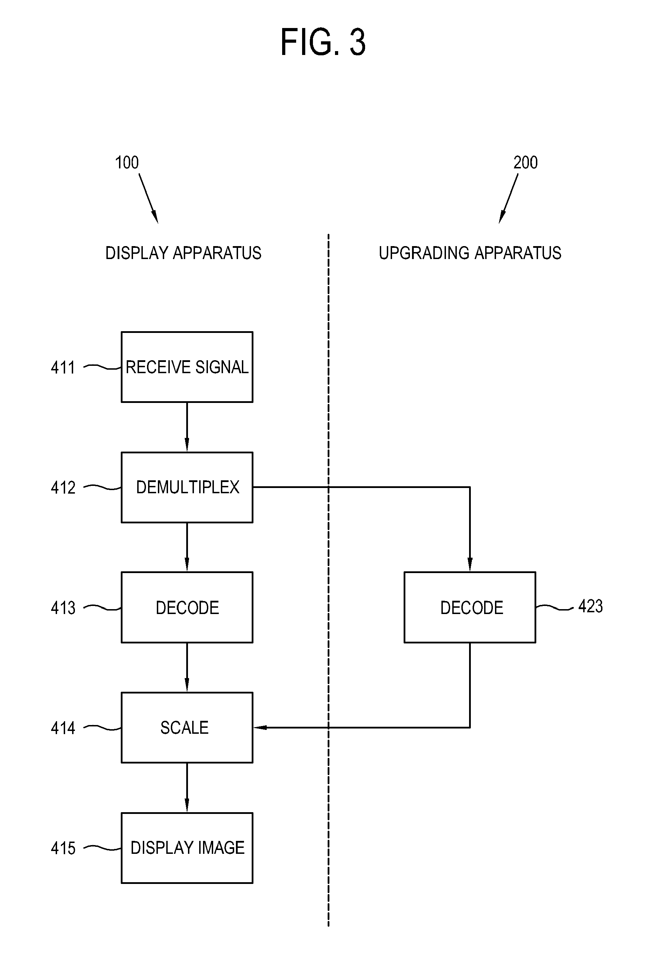

The second controller 260 controls the connection operation between the display apparatus 100 and the upgrading apparatus 200 to perform the overall image processing operation. The second controller 260 and the first controller 160 may include a CPU. If the second controller 260 may perform an improved function compared to the first controller 160, the second controller 260 may disable the first controller 160 and control the entire operations of the display system 1 by replacing the first controller 160. Otherwise, the second controller 260 may together with the first controller 160 control the entire operations of the display system 1. Hereinafter, an exemplary embodiment of upgrading the display apparatus 100 by the upgrading apparatus 200 will be described with reference to FIG. 3. FIG. 3 is a flowchart showing a method of upgrading the image processing operation of the display apparatus 100 by the upgrading apparatus 200 in the display system 1 according to the present exemplary embodiment.

As shown therein, upon receiving a predetermined signal, e.g., a broadcasting signal from the image supply source 300 (411), the display apparatus 100 processes the signal according to image processing operations 412, 413 and 414 in a preset sequence. Examples of the image processing operations 412, 413 and 414 shown in FIG. 3 include a part of those summarizing the exemplary embodiment and do not represent all of the image processing operations performed by the display apparatus 200.

The display apparatus 100 demultiplexes the received broadcasting signal by dividing the signal into an image signal, an audio signal and additional data (412). The display apparatus 100 processes the demultiplexed signal, e.g., decodes the image signal into a preset image format (413). The display apparatus 100 scales the decoded image signal into a predetermined resolution to display an image on the display unit 130 (414), and displays an image based on the scaled image signal (415).

Among a series of sequences, the upgrading apparatus 200 performs a process 423 corresponding to the decoding process (413) of the display apparatus 100. The decoding process 423 performed by the upgrading apparatus 200 is the same in operation but improved in functionality compared to the decoding process (413) performed by the display apparatus 100. Performing the decoding process (423) rather than the decoding process (413) may improve the image processing operation.

For example, the decoding process (423) may process an image signal in a resolution which may not be processed by the decoding process (413), may process an image signal in a format which may not be processed by the decoding process (413) or may add additional effect to an image signal which may not be added by the decoding process (413).

In the sequence of the image processing operation according to the preset exemplary embodiment, following the demultiplexing operation (412), the decoding operation (423) of the upgrading apparatus 200 replaces the decoding operation (413) of the display apparatus 100 according to a control of the first controller 160 or the second controller 260. The scaling operation (414) is performed following the decoding operation (423) of the upgrading apparatus 200.

In the foregoing sequence, the display apparatus 100 and the upgrading apparatus 200 transmit and receive image signals and control signals therebetween, according to a control of the first controller 160 or the second controller 260.

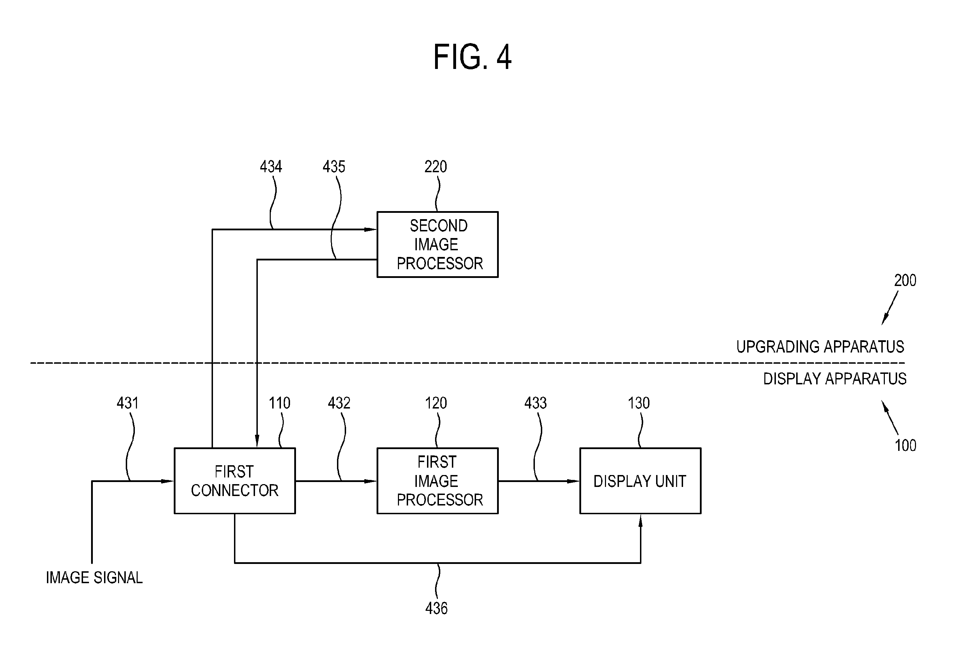

Unlike the case shown in FIG. 3 where part of the image processing operation is replaced, the second image processor 220 of the upgrading apparatus 200 may replace the first image processor 120 of the display apparatus 100. This will be described with reference to FIG. 4. FIG. 4 is a block diagram showing a transmission process for an image signal received by the first connector 110 in the display system 1 according to the present exemplary embodiment. As shown therein, if the upgrading apparatus 200 is not connected to the display apparatus 100, an image signal is received by the first connector 110 (431) and then transmitted to the first image processor 120 (432). The first image processor 120 processes the image signal and outputs the processed image signal to the display unit 130 (433). Then, the display unit 130 displays thereon an image based on the image signal processed by the first image processor 120.

If the upgrading apparatus 200 is connected to the display apparatus 100, an image signal is received by the first connector 110 (431), and then transmitted to the second image processor 220 (434) rather than to the first image processor 120 (432). The second image processor 220 processes the image signal by replacing the first image processor 120, and the processed image signal is transmitted back to the display apparatus 100 (435).

The image signal bypasses the first image processor 120 and is transmitted to the display unit 130 (436), and the display unit 130 displays thereon the image signal processed by the second image processor 220.

When the display apparatus 100 is connected to the upgrading apparatus 200, the second controller 260 may disable the first controller 160 and control the first and second image processors 120 and 220. Otherwise, if an operating system which is stored in the second storage unit 250 is a version-up of the operating system stored in the first storage unit 150, the operating system of the first storage unit 150 may be updated to the operating system of the second storage unit 250 and then driven, or the operating system of the second storage unit 250 may be driven instead of the operating system of the first storage unit 150.

With the foregoing configuration, the upgrading apparatus 200 according to the present exemplary embodiment may upgrade the display apparatus 100.

In the configuration for upgrading the display apparatus 100 by the upgrading apparatus 200, the case where a developer develops an application stored in the second storage unit 530 may be considered.

A developer of an application should develop the application in consideration of a target device in which the application is installed and executed. According to the present exemplary embodiment, the target device of the application is the upgrading apparatus 200.

As hardware develops in line with the development of technology, hardware features of the upgrading apparatus 200 depends on the use environment of the display apparatus 100. Thus, a developer should consider hardware features of the upgrading apparatus 200 in which the application is installed/stored in developing the application. A developer should check/inspect whether the developed application is normally executed in the upgrading apparatus 200.

In a conventional art, an operation environment of the application provided to a developer is software emulating environment where there is no target device. Such software emulating environment is a virtual operation environment in a computer (not shown), and a developer may inspect whether the application is executed at what level in the operation environment. Substantial hardware specification of the computer in which the software emulating environment is realized is different from the hardware specification of the upgrading apparatus 200 in which the application is to be installed. If the operation of the application is inspected in the software environment where there is no target device providing the substantial hardware environment does not guarantee that the application is normally executed in the upgrading apparatus 200.

However, to realize the substantial hardware emulating environment, each developer should take into consideration the display apparatus 100 and the upgrading apparatus 200, adding burden to the developer in the development environment.

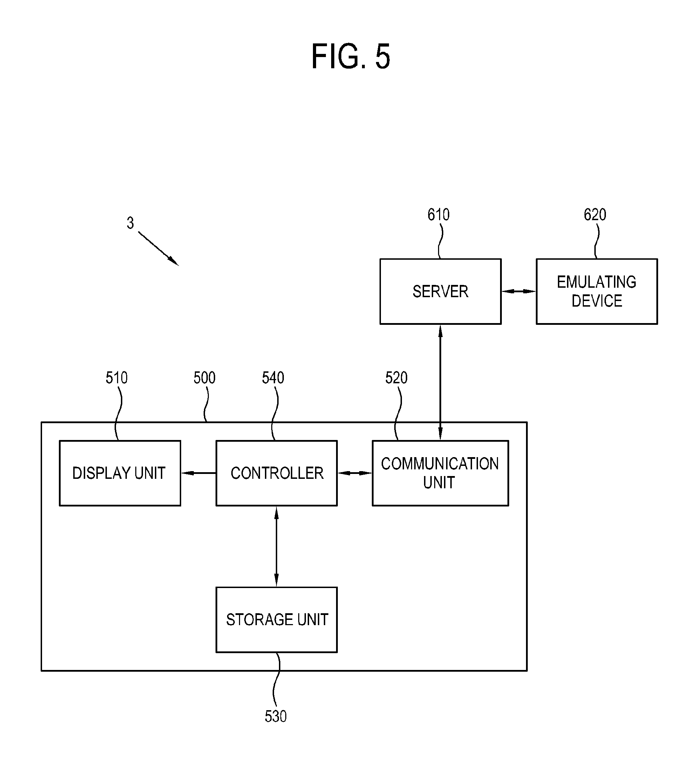

To that end, according to the present exemplary embodiment, a system for inspecting an application 3 with the following configuration is provided. The system for inspecting the application 3 will be described with reference to FIG. 5. FIG. 5 is a block diagram of the system for inspecting an application 3 according to the present exemplary embodiment.

The system for inspecting an application 3 includes at least one electronic apparatus 500, a server 610 which is connected to the electronic apparatus 500 in a network for communication, and at least one emulating device 620 which is locally connected to the server 610.

In FIG. 5, one electronic apparatus 500 and one emulating device 620 are connected to the server 610, respectively, but not limited thereto. Alternatively, a plurality of electronic apparatuses 500 and a plurality of emulating devices 620 may be connected to the server 610. The electronic apparatus 500 includes a computer for a developer to develop an application, and provides the environment for a developer to develop an application. The electronic apparatus 500 includes a display unit 510 which displays an image thereon, a communication unit 520 which communicates with the server 610, a storage unit 530 which stores therein data including an application, and a controller 540 which controls overall elements of the electronic apparatus 500. The electronic apparatus 500 further includes various input interfaces (not shown) such as a keyboard (not shown), and a mouse (not shown).

The emulating device 620 includes hardware specification corresponding to the upgrading apparatus 200 (refer to FIG. 2). The emulating device 620 includes hardware elements corresponding to overall elements of the upgrading apparatus 200, i.e., the second connector 210, the second image processor 220, the second storage unit 250 and the second controller 260. Thus, the emulating device 620 provides hardware environment which is the same as or similar to the upgrading apparatus 200.

The emulating device 620 is not limited in shape, and includes a dongle as an example, and is connected to the server 610 according to a local connection protocol such as USB.

If there is a plurality of emulating devices 620, each emulating device 620 may include different hardware specifications. That is, each emulating device 620 provides a different hardware environment. For example, each emulating device 620 has different internal components such as chipsets, circuits and memories, and may be classified as hardware by version.

The emulating device 620 is locally connected to the server 610, which communicates with the electronic apparatus 500 as a client through a network. In response to the request of the electronic apparatus 500 connected through the network, the server 610 relays communication between the electronic apparatus 500 and the emulating device 620.

In such a structure, according to the present exemplary embodiment, the controller 540 of the electronic apparatus 500 is connected to the server 610 and transmits to the emulating device 620 a predetermined application stored in the storage unit 530. The emulating device 620 processes and executes the received application, and transmits to the electronic apparatus 500 image information/image data corresponding to an execution image of the application. The controller 540 processes the image information supplied by the emulating device 620 and displays on the display unit 510 the execution image of the application executed by the emulating device 620.

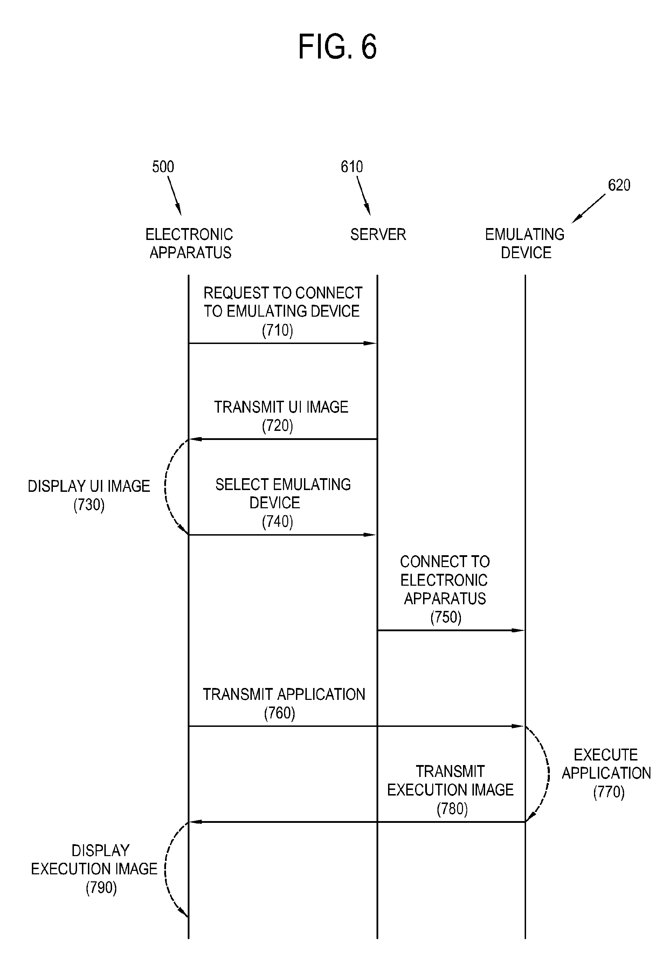

Then, a developer may execute an application, which is to be inspected, in the emulating device 620 as a target device having desired hardware specifications, and confirm in the electronic apparatus 500 the execution image of the application executed in the emulating device 620. A developer may efficiently inspect the operation of the application in the hardware environment corresponding to the target device without purchasing additional equipment. Hereinafter, an inspection method for an application executed in the system for inspecting an application 3 will be described with reference to FIG. 6. FIG. 6 illustrates a signal transmission and reception between the electronic apparatus 500, the server 610 and the emulating device 620.

Basically, the electronic apparatus 500 is connected to the server 610 through a network, and the plurality of emulating devices 620 are locally connected to the server 610.

As shown therein, the electronic apparatus 500 is connected to the server 610 and requests the server 610 to connect to the emulating devices 620 (710).

In response to the request from the electronic apparatus 500, the server 610 transmits to the electronic apparatus 500 user interface (UI) image information including a list of the emulating devices 620 connected to the server 610 (720).

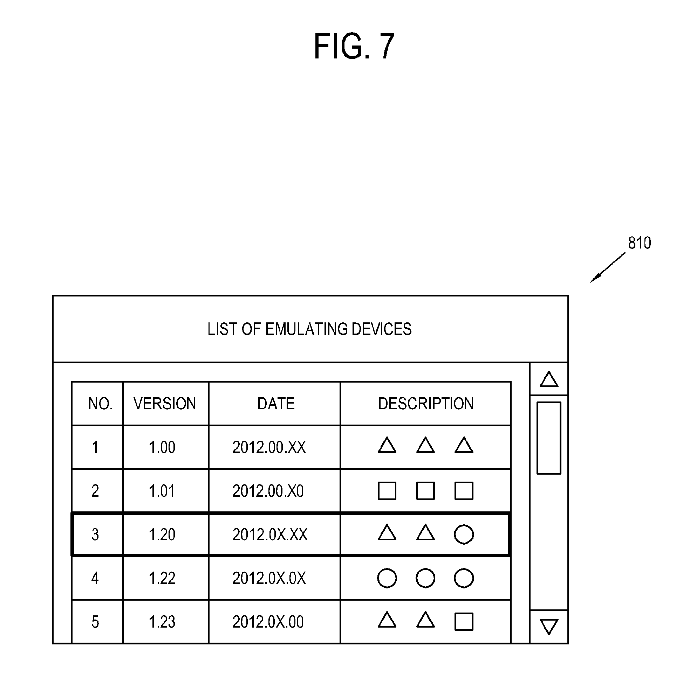

The electronic apparatus 500 displays a UI image 810 (refer to FIG. 7) which is provided to select one of the plurality of emulating devices 620 connected to the server 610, according to UI image information from the server 610 (730). The UI image 810 includes overall information of each emulating device 620, e.g., serial number, version number, a launching date for the corresponding upgrading apparatus 200 or a date of development of the emulating device 620, hardware specifications of the emulating device 620 and relevant information.

The electronic apparatus 500 selects one emulating device 620 corresponding to the target device of the application through the UI image 810 (740). The server 610 is connected to the electronic apparatus 500 for communication with respect to the emulating device 620 selected by the electronic apparatus 500 and forms a communication route for interactive communication between the emulating device 620 and the electronic apparatus 500 (750). The electronic apparatus 500 transmits to the connected emulating device 620 the stored application which is to be inspected (760).

The emulating device 620 includes hardware corresponding to the target device, and thus may independently process and execute the application. The emulating device 620 processes and executes the application supplied by the electronic apparatus 500 (770). The emulating device 620 may receive a user's input from the electronic apparatus 500 to execute the application. While executing the application, the emulating device 620 transmits to the electronic apparatus 500 data regarding the execution image of the application (780).

The electronic apparatus 500 displays the execution image of the application executed by the emulating device 620 based on the image data supplied by the emulating device 620 (790). That is, the execution image of the application displayed in the electronic apparatus 500 is an image of the application executed by the emulating device 620 rather than the electronic apparatus 500.

A developer may inspect whether the application is normally executed in the target device, through the execution image displayed in the electronic apparatus 500.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. An electronic apparatus comprising:
a display unit;
a communication unit which communicates with a server to which at least one emulating device is connected locally, through a network;
a storage unit which stores therein a predetermined application; and
a controller which is connected to the server and transmits the predetermined application stored in the storage unit to the at least one emulating device, and receives from the at least one emulating device an execution image of the application processed and executed by the at least one emulating device and displays the execution image on the display unit.

2. The electronic apparatus according to claim 1, wherein the at least one emulating device comprises hardware specifications of an upgrading apparatus which is connected to a display apparatus processing an image signal according to a preset image processing operation and displaying an image based on the processed image signal, and the upgrading apparatus upgrades the image processing operation.

3. The electronic apparatus according to claim 1, wherein the at least one emulating device is plurally connected to the server, and at least a part of the plurality of emulating devices comprises different hardware specifications from the remaining emulating devices.

4. The electronic apparatus according to claim 3, wherein the controller displays a user interface (UI) image which is provided to select one of the plurality of emulating devices connected to the server, and is connected to the emulating device selected through the UI image.

5. The electronic apparatus according to claim 1, wherein the at least one emulating device is realized as a dongle and connected to the server.

6. A control method of an electronic apparatus comprising:
connecting at least one emulating device locally to a server through a network;
transmitting a stored predetermined application to the at least one emulating device; and
receiving from the at least one emulating device and displaying an execution image of the application processed and executed by the at least one emulating device.

7. The control method according to claim 6, wherein the at least one emulating device corresponds to hardware specification of an upgrading apparatus which is connected to a display apparatus processing an image signal according to a preset image processing operation and displaying an image based on the processed image signal, and the upgrading apparatus upgrades the image processing operation.

8. The control method according to claim 6, wherein the at least one emulating device is plurally connected to the server, and at least a part of the plurality of emulating devices comprises different hardware specifications from the remaining emulating devices.

9. The control method according to claim 8, wherein the connecting of the at least one of the plurality of emulating devices to the server through the network comprises displaying a UI image which is provided to select one of the plurality of emulating devices connected to the server; and connecting the emulating device selected through the UI image.

10. The control method according to claim 6, wherein the at least one emulating device is realized as a dongle and connected to the server.

11. A system for inspecting an application comprising:
at least one client;
a server which communicates with the at least one client through a network; and
at least one emulating device which is locally connected to the server,
wherein the client connects to the server and transmits a stored application to the at least one emulating device, and the at least one emulating device processes and executes the application transmitted by the client and transmits an execution image of the application to the client to display the execution image in the client.
